# EUROPÄISCHE PATENTSCHRIFT

(11) **EP 2 567 201 B1**
(45) Veröffentlichungstag und Bekanntmachung des Hinweises auf die Patenterteilung: **18.10.2017**
(21) Anmeldenummer: 11714753.8
(22) Anmeldetag: 13.04.2011
(51) Int. Cl.: G01G 15/00, G01G 17/04, B07C 5/34, G01G 17/00

(54) **WAAGE MIT KALIBRIERVORRICHTUNG**
BALANCE HAVING A CALIBRATION DEVICE
BALANCE À DISPOSITIF DE CALIBRAGE

(30) Priorität: 07.05.2010 DE 102010028733
(43) Veröffentlichungstag der Anmeldung: 13.03.2013
(73) Patentinhaber: Robert Bosch GmbH, 70442 Stuttgart (DE)
(72) Erfinder: FLECKENSTEIN, Tim, 74541 Vellberg (DE)
(86) Internationale Anmeldenummer: PCT/EP2011/055807
(87) Internationale Veröffentlichungsnummer: WO 2011/138140

(56) Entgegenhaltungen:
- WO-A2-2009/102964
- DE-A1- 19 920 494
- US-A- 5 934 859
- US-B1- 6 420 666

## Beschreibung

### Stand der Technik

Die vorliegende Erfindung betrifft eine Waage mit einer Kalibriereinrichtung, insbesondere zum Wiegen von pharmazeutischen Erzeugnissen.

Aus der DE 199 20 494 A1 ist beispielsweise eine Vorrichtung zum Wiegen von pharmazeutischen Behältnissen bekannt, welche die Behältnisse vor und nach einem Füllvorgang wiegt. Hierbei ist ein Greifer vorgesehen, der die Behältnisse während einer Stillstandsphase einer taktweise arbeitenden Transporteinrichtung entnimmt, das Gewicht der leeren Behältnisse ermittelt, die leeren Behältnisse in eine Füllposition bringt und befüllt, die befüllten Behältnisse wieder wiegt, und nach dem Wiegen wieder der taktweise arbeitenden Transportvorrichtung zuführt.

Bei derartigen Maschinen muss die Waage jedoch in regelmäßigen Abständen kalibriert werden. Dies erfolgt bisher manuell, indem einzelne Kalibriergewichte an die Wiegezellen der Waage angebracht werden und nach dem Kalibrieren wieder entfernt werden. Dieser Vorgang ist sehr zeitintensiv und führt somit zu unerwünschten langen Stillstandszeiten der Abfüllanlage. Insbesondere im pharmazeutischen Bereich kann jedoch auf möglichst exakte Füllmengen nicht verzichtet werden, um Falschdosierungen des Medikaments aufgrund abweichender Füllmengen zu vermeiden. Aus US 5 934 859 A ist eine Greifeinheit bekannt. Aus US 6 420 666 B1 ist eine Laborwaage bekannt. WO 2009/102964 A2 zeigt eine Vorrichtung gemäß dem Oberbegriff des Anspruchs 1.

### Offenbarung der Erfindung

Die erfindungsgemäße Vorrichtung zum Wiegen von Behältnissen mit den Merkmalen des Anspruchs 1 weist demgegenüber den Vorteil auf, dass eine automatische Kalibrierung der Vorrichtung vorgenommen werden kann, welche sehr schnell ausgeführt werden kann und somit nur zu geringen Stillstandszeiten einer Abfüllvorrichtung führt. Dabei ist die erfindungsgemäße Vorrichtung sehr kompakt und kleinbauend. Erfindungsgemäß ist hierbei kein manueller Eingriff notwendig, so dass eine Kalibrierung vollautomatisch erfolgen kann. Die Erfindung ermöglicht es somit auch, dass während eines Abfüllvorgangs einer Charge einmal oder mehrmals eine Überprüfung der Waage vorgenommen werden kann, so dass genauere Abfüllergebnisse erreicht werden können. Dies wird erfindungsgemäß dadurch erreicht, dass die Vorrichtung zum Wiegen von Behältnissen wenigstens eine Wiegezelle zur Aufnahme der zu wiegenden Behältnisse sowie eine Kalibriereinrichtung umfasst. Die Kalibriereinrichtung weist eine Greifeinheit mit einer Bewegungsvorrichtung und einem Greifer, wenigstens ein Kalibriergewicht und eine Haltevorrichtung zum Halten des Kalibriergewichts, auf. Die Greifeinheit entnimmt dabei das Kalibriergewicht aus der Haltevorrichtung und führt das Kalibriergewicht zur Wiegezelle. Dort erfolgt dann eine Kalibrierung der Waage und anschließend wird das Kalibriergewicht mit der Greifeinheit wieder von der Waage entnommen und zurück zur Haltevorrichtung bewegt und dort abgegeben. Hierbei läuft der gesamte Vorgang automatisch ab.

Die Unteransprüche zeigen bevorzugte Weiterbildungen der Erfindung.

Vorzugsweise umfasst die Kalibriereinrichtung eine Vielzahl von ersten Kalibriergewichten mit einem ersten Gewicht und einer Vielzahl von zweiten Kalibriergewichten mit einem zweiten Gewicht, welches unterschiedlich zum ersten Gewicht ist. Die ersten und zweiten Gewichte sind dabei abwechselnd in der Haltevorrichtung angeordnet und alle ersten oder alle zweiten Kalibriergewichte können dabei gleichzeitig mittels der Greifeinheit entnommen werden. Hierdurch können automatisch Kalibrierungen mehrerer Wiegezellen mit unterschiedlichen Gewichten ausgeführt werden, so dass eine Abfüllanlage schnell und kostensparend auf ein anderes Produkt mit anderen Füllmengen umgestellt werden kann.

Weiter bevorzugt ist bei der Vielzahl von Kalibriergewichten an jedem Kalibriergewicht jeweils ein gleich ausgebildeter Angriffsbereich vorgesehen, an dem der Greifer der Greifeinheit angreift. Hierdurch können verschiedene Kalibriergewichte mit unterschiedlichen Gewichten verwendet werden, ohne dass dabei der Greifer der Greifeinheit ausgetauscht werden muss. Erfindungsgemäßist der Greifer vorzugsweise ein Vakuumgreifer. Hierdurch kann ein besonders einfacher und sicherer Greifvorgang gewährleistet werden.

Für einen besonders kompakten Aufbau ist die Haltevorrichtung, in welcher die Kalibriergewichte gehalten werden, vorzugsweise unterhalb der Wiegezelle angeordnet.

Die Bewegungsvorrichtung umfasst vorzugsweise einen mehrachsigen Roboterarm, durch welchen ein Manipulieren der Kalibriergewichte sehr einfach vorgenommen werden kann.

Gemäß einer weiteren bevorzugten Ausgestaltung der Erfindung ist die Haltevorrichtung zum Halten der Kalibriergewichte austauschbar angeordnet. Hierdurch kann durch vollständiges Austauschen der Haltevorrichtung schnell und einfach ein Austausch der Kalibriergewichte mit anderen Gewichten vorgenommen werden.

Erfindungsgemäß umfasst die Wiegezelle erste Aufnahmeelemente für die Behältnisse und zweite Aufnahmeelemente für die Kalibriergewichte. Dadurch kann vermieden werden, dass die Kalibriergewichte mit den ersten Aufnahmeelementen für die Behältnisse in Kontakt kommen und dadurch Verunreinigung oder dergleichen an diesen Aufnahmeelementen verursachen könnten. Vorzugsweise sind dabei die zweiten Aufnahmeelemente für die Kalibriergewichte unterhalb der ersten Aufnahmeelemente für die Behältnisse angeordnet.

Die erfindungsgemäße Vorrichtung wird vorzugsweise im pharmazeutischen Bereich in Verbindung mit pharmazeutischen Abfüllanlagen verwendet. Hierbei kann durch die Erfindung ein exaktes Wiegen der befüllten Behältnisse durchgeführt werden, wobei gegebenenfalls mehrfach ein Kalibriervorgang während der Abfüllung einer Charge durchgeführt werden kann, ohne dass es hier zu langen Stillstandszeiten der Maschine kommt. Besonders bevorzugt wird die erfindungsgemäße Vorrichtung bei einer Füllmaschine für vorsterilisierte Spritzen verwendet.

### Zeichnung

Nachfolgend wird ein bevorzugtes Ausführungsbeispiel der Erfindung unter Bezugnahme auf die begleitende Zeichnung im Detail beschrieben. In der Zeichnung ist:
- Figur 1: eine schematische, perspektivische Ansicht einer Vorrichtung gemäß einem Ausführungsbeispiel der Erfindung,
- Figur 2: eine vergrößerte Darstellung eines Greifers und einer Haltevorrichtung der Vorrichtung von Figur 1,
- Figur 3: eine schematische Darstellung eines Entnahmevorgangs der Kalibriergewichte,
- Figur 4: eine schematische Darstellung eines Einsetzvorgangs der Kalibriergewichte an Wiegezellen,
- Figur 5: eine schematische Darstellung eines Kalibriervorgangs mit ersten Gewichten, und
- Figur 6: eine schematische Darstellung eines Kalibriervorgangs mit zweiten Gewichten.

### Bevorzugte Ausführungsform der Erfindung

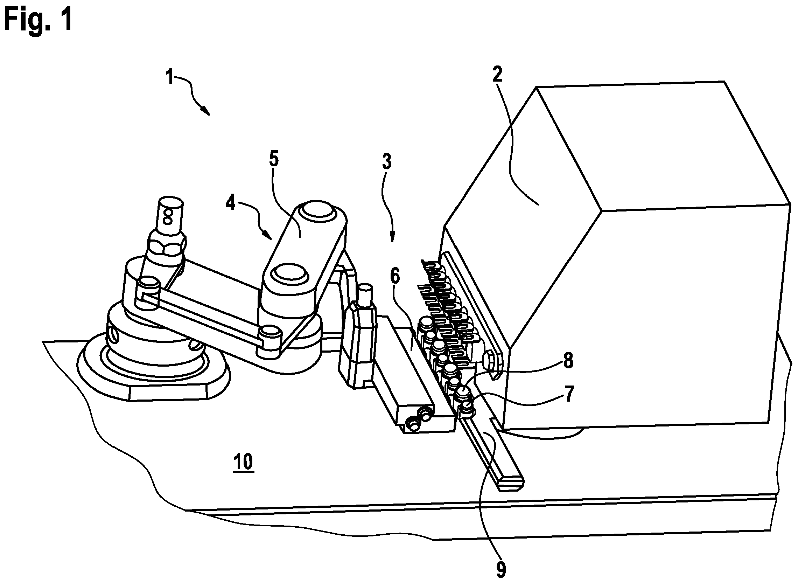

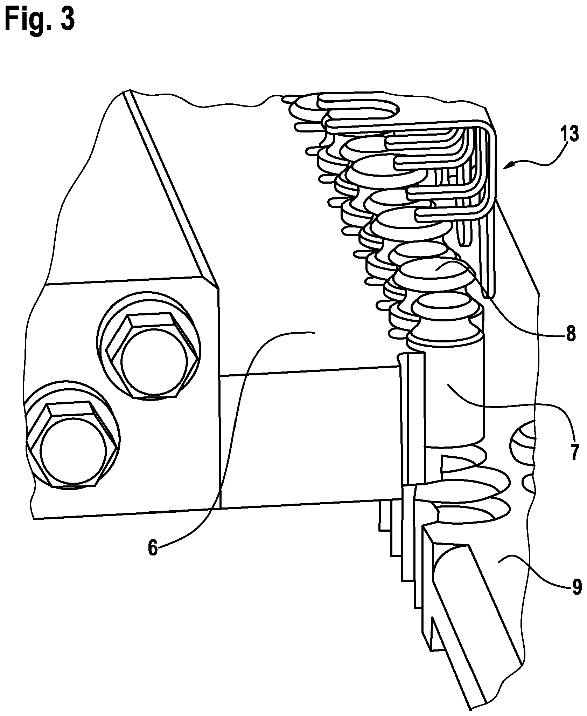

Nachfolgend wird unter Bezugnahme auf die Figuren 1 bis 6 eine Vorrichtung 1 zum Wiegen von Behältnissen im Detail beschrieben.

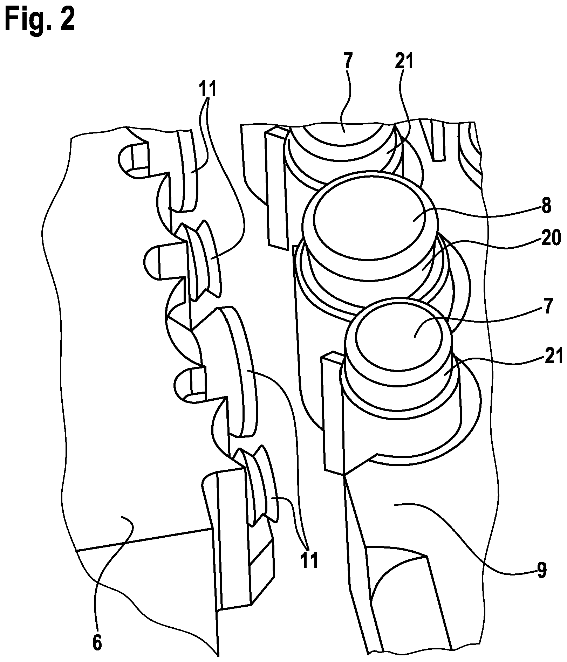

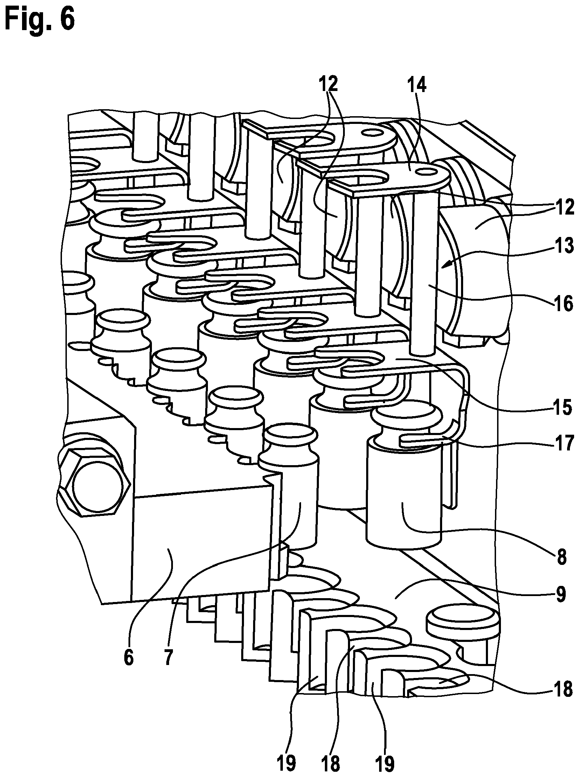

Wie aus Figur 1 ersichtlich ist, umfasst die Vorrichtung 1 eine Waage 2 sowie eine vor der Waage 2 angeordnete Kalibriereinrichtung 3. Die Kalibriereinrichtung 3 umfasst eine Greifeinheit 4 mit einer Bewegungsvorrichtung 5 und einer am freien Ende der Bewegungsvorrichtung 5 angeordneten Greifer 6. Der Greifer 6 umfasst eine Vielzahl von Vakuum-Saugvorrichtungen 11 (siehe Figur 2), um Kalibriergewichte 7, 8 anzusaugen. Die Bewegungsvorrichtung 5 ist ein mehrachsiger Roboterarm, dessen Antrieb an einem Maschinentisch 10 befestigt ist. Wie aus Figur 2 ersichtlich ist, sind die an einer Stirnseite des Greifers 6 angeordneten Vakuum-Saugvorrichtungen 11 in zwei unterschiedlichen Größen vorgesehen, wobei die unterschiedlichen Größen abwechselnd angeordnet sind. Die unterschiedlichen Größen sind deshalb vorgesehen, da die Kalibriergewichte ebenfalls in unterschiedlichen Größen vorgesehen sind, nämlich ein erstes Kalibriergewicht 7 und ein zweites Kalibriergewicht 8, wobei das erste Kalibriergewicht 7 das halbe Gewicht des zweiten Kalibriergewichts 8 aufweist. Die Kalibriergewichte 7, 8 weisen standardisierte Angriffsbereiche 20, 21 auf.
Die Kalibriergewichte 7, 8 sind in einer Halterung 9 angeordnet. Hierzu sind in der Halterung 9 Ausnehmungen 18, 19 (vgl. Figur 6) vorgesehen, welche entsprechend der Größen der Kalibriergewichte 7, 8 ausgebildet sind und welche z.B. über eine leichte Klemmpassung die Kalibriergewichte 7, 8 halten oder alternativ diese formschlüssig umgeben. Die Haltevorrichtung 9 ist dabei austauschbar unter der Waage 2 angeordnet, so dass eine andere Haltevorrichtung 9 mit anderen Kalibriergewichten, d.h., Kalibriergewichten mit anderen Gewichten oder frisch gereinigte und sterilisierte Kalibriergewichte, leicht eingesetzt werden kann.

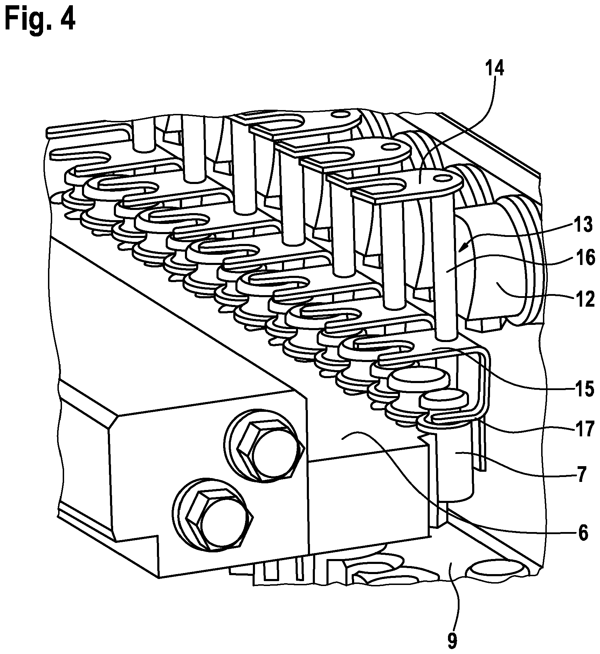

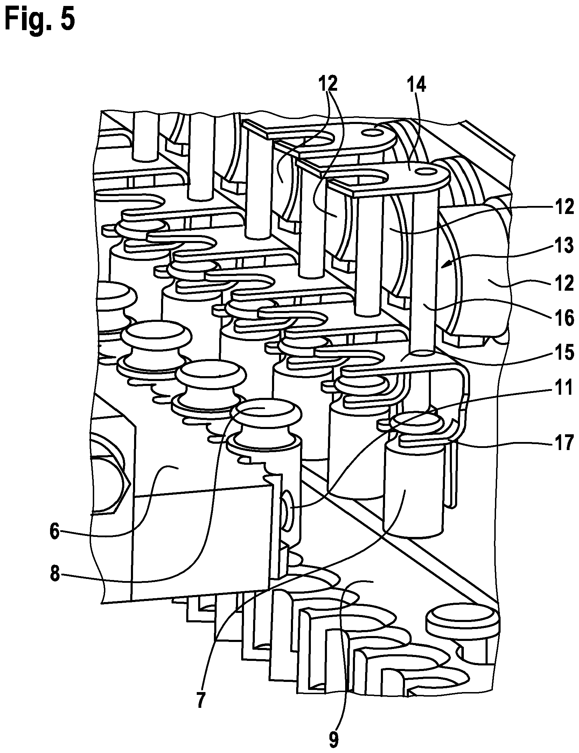

An der Waage 2 sind in Reihe nebeneinander eine Vielzahl von Wiegezellen 12 angeordnet (siehe Figuren 1 und 4). An jeder der Wiegezellen 12 ist jeweils eine Aufnahme 13 für die Behältnisse fixiert, wobei die Aufnahme 13 eine erste Halterung 14, eine zweite Halterung 15 und eine Verbindungsstange 16 umfasst. Ferner ist an der zweiten Halterung 15 jeweils noch eine dritte Halterung 17 für die Kalibriergewichte 7, 8 vorgesehen. Die zweite Halterung 15 und die dritte Halterung 17 sind dabei aus einem im Schnitt U-förmigen Bauteil hergestellt (siehe Figur 5 und 6). Wie auch aus den Figuren 5 und 6 ersichtlich ist, sind die Aufnahmen 13 über die Verbindungsstangen 16 mit den jeweiligen Wiegezellen 12 verbunden.
Die Funktion der erfindungsgemäßen Vorrichtung 1 ist dabei wie folgt. In der Haltevorrichtung 9 sind die ersten und zweiten Kalibriergewichte 7, 8 mit unterschiedlichen Gewichten angeordnet. Wenn ein Kalibriervorgang der Waage 2 durchgeführt werden soll, wird die Bewegungsvorrichtung 5 aktiviert, so dass der Greifer 6 mittels der Vielzahl von Vakuum-Saugvorrichtungen 11 die ersten und/oder zweiten Kalibriergewichte 7, 8 durch Ansaugen aufnimmt. Der Vorgang kurz vor dem Ansaugen ist dabei in Figur 2 angedeutet. Wenn die Kalibriergewichte 7, 8 vom Greifer 6 aufgenommen worden sind, werden die Kalibriergewichte, mit welcher die Kalibrierung vorgenommen werden soll, durch die Bewegungsvorrichtung 5 zu den dritten Halterungen 17 für die Kalibriergewichte geführt (siehe Figur 4). In Figur 5 werden beispielhaft die ersten Kalibriergewichte 7 an die dritte Halterung 17 eingehängt, wobei die zweiten Kalibriergewichte 8 noch am Greifer 6 verblieben sind (siehe Figur 5). In Figur 6 ist eine Kalibrierung mit den zweiten Kalibriergewichten 8 dargestellt, welche in der dritten Halterung 17 angeordnet sind, wohingegen die ersten Kalibriergewichte 7 noch am Greifer 6 befindlich sind.

Da die ersten und zweiten Kalibriergewichte 7, 8 jeweils gleiche Angriffsbereiche 20, 21 an einem Kopfbereich aufweisen, können die ersten und zweiten Kalibriergewichte 7, 8 in die gleiche, dritte Halterung 17 an der Waage eingehängt werden.

Somit kann eine Kalibrierung der Waage 2 durchgeführt werden, wobei die Kalibriergewichte 7, 8 automatisch zur Waage 2 zugeführt und auch wieder von der Waage 2 entfernt werden können. Hierzu wird der Greifer 6 in gleicher Weise wieder zu den in der dritten Halterung 17 befindlichen Kalibriergewichten hingefahren, die in der dritten Halterung 17 befindlichen Kalibriergewichte werden angesaugt und der Greifer wird wieder weggefahren und die Kalibriergewichte zurück in die Haltevorrichtung 9 gebracht.

Die erste Halterung 14 und die zweite Halterung 15 dienen dabei beispielsweise zur Aufnahme einer zu füllenden Spritze, welche in die erste Halterung 14 eingehängt werden kann, wobei die zweite Halterung 15 zur Vermeidung von unerwünschten Bewegungen der Spritze an der Waage 2 dient und ein Endbereich der Spritze an der zweiten Halterung 15 anliegt.

Im beschriebenen Ausführungsbeispiel kann die Kalibriereinrichtung 3 zwei verschiedene Kalibriervorgänge automatisch durchführen. Soll mit einem anderen Gewicht kalibriert werden, muss lediglich die Haltevorrichtung 9 gegen eine andere ausgetauscht werden, an welcher das gewünscht Kalibriergewicht angeordnet ist. Erfindungsgemäß können somit schnell und einfach vollautomatisch Kalibriervorgänge an einer Waage 2 ausgeführt werden, wobei keine langen Stillstandszeiten einer Füllmaschine (in den Figuren nicht gezeigt) auftreten. Es sei angemerkt, dass die Füllmaschine beispielsweise über der Waage 2 angeordnet sein kann, so dass eine Befüllung von Behältnissen in den Halterungen 14, 15 von oben erfolgen kann, während die Behältnisse in der Aufnahme 13 angeordnet sind.

Es sei ferner angemerkt, dass die Halterungen 14, 15 zur Aufnahme der Behältnisse auch derart ausgebildet sein können, dass diese Halterungen auch die Kalibriergewichte 7, 8 aufnehmen können.

## Patentansprüche

1. Vorrichtung zum Wiegen von Behältnissen, umfassend
- eine Waage (2) mit einer Vielzahl von Wiegezellen (12) zur Aufnahme von zu wiegenden Behältnissen, und
- eine Kalibriereinrichtung (3) mit
- einer Greifeinheit (4), umfassend eine Bewegungsvorrichtung (5) und einen Greifer (6),
- wenigstens ein Kalibriergewicht (7, 8), und
- eine Haltevorrichtung (9) zum Halten des wenigstens einen Kalibriergewichts (7, 8),
- **dadurch gekennzeichnet, dass** die Waage (2) eine Aufnahme (13) mit einer Halterung (14, 15) für die Behältnisse und einer Halterung (17) für die Kalibriergewichte aufweist, wobei an jeder Wiegezelle (12) jeweils eine Aufnahme (13) fixiert ist, wobei der Greifer (6) eine Vielzahl von Vakuum-Saugvorrichtungen (11) umfasst, um Kalibriergewichte (7, 8) anzusaugen.

2. Vorrichtung nach Anspruch 1, **gekennzeichnet durch** eine Vielzahl von ersten Kalibriergewichten (7) mit einem ersten Gewicht und eine Vielzahl von zweiten Kalibriergewichten (8) mit einem zweiten Gewicht, wobei die ersten und zweiten Kalibriergewichte (7, 8) abwechselnd in der Haltevorrichtung (9) angeordnet sind.

3. Vorrichtung nach einem der vorhergehenden Ansprüche, **dadurch gekennzeichnet, dass** die Kalibriergewichte (7, 8) jeweils einen gleich ausgebildeten Angriffsbereich (20, 21) aufweisen.

4. Vorrichtung nach einem der vorhergehenden Ansprüche, **dadurch gekennzeichnet, dass** die Haltevorrichtung (9) unterhalb der Waage (2) angeordnet ist.

5. Vorrichtung nach einem der vorhergehenden Ansprüche, **dadurch gekennzeichnet, dass** die Bewegungsvorrichtung (5) einen mehrachsigen Roboterarm umfasst.

6. Vorrichtung nach einem der vorhergehenden Ansprüche, **dadurch gekennzeichnet, dass** die Haltevorrichtung (9) austauschbar angeordnet ist.

## Claims

1. Device for weighing containers, comprising
- a balance (2) with a multiplicity of weighing cells (12) for receiving containers for weighing, and
- a calibration device (3) having
- a gripping unit (4) comprising a movement device (5) and a gripper (6),
- at least one calibration weight (7, 8), and
- a holding device (9) for holding the at least one calibration weight (7, 8),
- **characterized in that** the balance (2) has a receptacle (13) with a holder (14, 15) for the containers and a holder (17) for the calibration weights, wherein in each case one receptacle (13) is fixed to each weighing cell (12), wherein the gripper (6) comprises a multiplicity of vacuum suction devices (11) for taking hold of calibration weights (7, 8) by suction.

2. Device according to Claim 1, **characterized by** a multiplicity of first calibration weights (7) with a first weight and a multiplicity of second calibration weights (8) with a second weight, wherein the first and second calibration weights (7, 8) are arranged in the holding device (9) in alternating fashion.

3. Device according to one of the preceding claims, **characterized in that** the calibration weights (7, 8) each have an engagement region (20, 21) of identical form.

4. Device according to one of the preceding claims, **characterized in that** the holding device (9) is arranged beneath the balance (2).

5. Device according to one of the preceding claims, **characterized in that** the movement device (5) comprises a multi-axis robot arm.

6. Device according to one of the preceding claims, **characterized in that** the holding device (9) is arranged in exchangeable fashion.

## Revendications

1. Dispositif de pesage de récipients, comprenant
- une balance (2) avec une multiplicité de cellules de pesage (12) destinées à recevoir des récipients à peser, et
- un dispositif de calibrage (3) avec
- une unité de saisie (4), comprenant un dispositif de déplacement (5) et un organe de préhension (6),
- au moins un poids de calibrage (7, 8), et
- un dispositif de maintien (9) destiné à maintenir ledit au moins un poids de calibrage (7, 8),
- **caractérisé en ce que** la balance (2) présente un logement (13) avec un support (14, 15) pour les récipients et un support (17) pour les poids de calibrage, dans lequel un logement (13) est respectivement fixé à chaque cellule de pesage (12), dans lequel l'organe de préhension (6) comprend une multiplicité de dispositifs d'aspiration sous vide (11), destinés à aspirer des poids de calibrage (7, 8).

2. Dispositif selon la revendication 1, **caractérisé par** une multiplicité de premiers poids de calibrage (7) avec un premier poids et une multiplicité de seconds poids de calibrage (8) avec un second poids, dans lequel les premiers et les seconds poids de calibrage (7, 8) sont disposés en alternance dans le dispositif de maintien (9).

3. Dispositif selon l'une quelconque des revendications précédentes, **caractérisé en ce que** les poids de calibrage (7, 8) présentent respectivement une région de saisie de même forme (20, 21).

4. Dispositif selon l'une quelconque des revendications précédentes, **caractérisé en ce que** le dispositif de support (9) est disposé en dessous de la balance (2).

5. Dispositif selon l'une quelconque des revendications précédentes, **caractérisé en ce que** le dispositif de déplacement (5) est un bras de robot multiaxe.

6. Dispositif selon l'une quelconque des revendications précédentes, **caractérisé en ce que** le dispositif de support (9) est disposé de façon interchangeable.
